# EUROPEAN PATENT APPLICATION

(11) **EP 1 785 834 A2**
(43) Date of publication of application: **16.05.2007**
(21) Application number: 06255115.5
(22) Date of filing: 03.10.2006
(51) Int. Cl.: G06F 3/06

(54) **Storage system and method of controlling a storage system**

(30) Priority: 21.10.2005 JP 2005307719
(71) Applicant: Hitachi, Ltd., Tokyo (JP)
(72) Inventor: Akagawa, Etsutaro c/o Hitachi, Ltd., Tokyo 100-8220 (JP); Nakatani, Yoji c/o Hitachi, Ltd., Tokyo 100-8220 (JP); Sonoda, Koji c/o Hitachi, Ltd., Tokyo 100-8220 (JP)
(74) Representative: Hodsdon, Stephen James

(57) **Abstract**

Provided is a storage system (600) capable of preventing the access performance from a client (20) to a file system from deteriorating even when a file system is migrated among a plurality of file servers. This storage system provides a shared file system (31) having the same namespace to the client accessing the file system. This storage system stores in its memory (14) a first information table (63) storing the correspondence of the file system and the file server mounting the file system, and a second information table (61) storing the correspondence of the file system and the frequency of access by the client to the file system.

## Description

This application relates to and claims priority from Japanese Patent Application No. 2005-307719, filed on October 21, 2005, the entire disclosure of which is incorporated herein by reference.

The present invention pertains to a storage system, and in particular to a storage system in which a plurality of file servers provide a shared file system having the same namespace to a client.

In recent years, storage consolidation of consolidating the storages distributed and installed in the respective servers into a single storage system is becoming common. Further, the service of sharing files among computers on a network via a file sharing protocol such as NFS (Network File System) or CIFS (Common Interface File System) is becoming popular.

In companies, the system management division in charge of providing the services of setup, operation, maintenance and so on of storages, for instance, as a mode of operating storage consolidation, provides a logical volume configured by logically dividing a single storage system to the respective business divisions via a file server. The system management division providing this kind of storage service is seeking to consolidate the storage management and reduce management costs through such storage consolidation.

Further, there is load-balancing technology of including a plurality of file servers on a storage system, and dispersing the load accompanying the file accesses from the client device among file servers in order to improve the performance of the file access service. With this storage system, by unifying the namespace of the shared file system provided by the plurality of file servers, the plurality of file servers will be able to act as though they are providing a single shared file system to the client enjoying the file service.

As conventional technology for achieving the above, there is US 6,671,773 (Patent Document 1). Patent Document 1 discloses technology relating to a switch disposed between a client enjoying the file service and a plurality of file servers and which has a function of converting the namespace of a shared file system to be accessed by the client and the namespace of a shared file system provided by the file server to the client.

Further, RFC3010, Chapter 6, Page 4, http://www.ietf.org/rfc/rfc3010.txt (Non-Patent Document 1) discloses technology relating to a storage system where a plurality of file servers provide a shared file system having the same namespace, wherein when a client accesses a file server that does not mount the target file system, this file server notifies the client device of the name or IP (Internet Protocol) address of another file server that mounts such target file system. According to this technology, a client who receives specific information of a file server will be able to access one's target file system by accessing this file server.

When a plurality of file servers act as though they provide a single shared file system to a client, the client will be able to enjoy the file service without having to depend on the configuration of the file server. Therefore, the addition of a new file server to a storage system or changes to the configuration of the file server for performing the load-balancing of the file server can be realized without affecting the client. For example, when the access frequency from a client is high to a single file server, the file system with high access frequency mounted on this file server is migrated to another file server. Thereby, it is possible to avoid the concentrated access from a client to a specific file server, and the access load among the plurality of servers can be made uniform. Even if the target file system is migrated to another file server, the client is able to continue accessing one's target file system.

When a file system is migrated to a file server that is different from the file server initially accessed by the client, each time the client accesses the file server, the file server needs to notify information to the client regarding the file server to which the file system was migrated. The client who receives this notification is required to re-access the file server to which the file system was migrated. As a result, even though it is possible to alleviate the concentration of the access load to a specific file server, the number of trials to be performed by the client in order to access the target file system will increase, and it is possible that the access performance from the client to the file system will deteriorate.

Thus, in one aspect of the present invention, provided is a storage system that will not deteriorate the access performance from the client to the file system even when a file system is migrated among a plurality of file servers.

In another aspect of the present invention, provided is a storage system in which, even when a file system is migrated among a plurality of file servers, when a certain file server receives a request from a client to access a file system mounted on another file server, the number of times the request is transferred to another file server can be reduced in the overall system. In another aspect of the present invention, a method of controlling a storage system is also provided.

In order to overcome at least one of the foregoing problems, or in order to realize at least one of the foregoing aspects, aspects of the present invention are provided with a table for managing the status of the client accessing a node resource, and refers to this table, decides the node to which the resource is to be migrated, and thereby reduces the number of trials until the client is able to access one's target resource.

In other words, one aspect of the present invention provides a storage system, having: a plurality of file servers; a plurality of file systems to be mounted on the file servers; a storage device for providing a storage area to the file servers; and a management module for managing the access of a client to the file systems mounted on the file servers; wherein the storage system provides a shared file system having the same namespace to the client accessing the file systems; and wherein the management module, includes: a first information table storing the correspondence of the file system and the file server mounting the file system; and a second information table storing the correspondence of the file system and the frequency of access by the client to the file system.

Further, another aspect of the present invention provides a storage system, having: a plurality of nodes; a plurality of resources to be mounted on the nodes; a storage device for providing a storage area to the resources; a management module for managing the access of a client to the resources mounted on the nodes; a table for managing the status of the client accessing the resources; and a management module for referring to the table, deciding the node to which the resource is to be migrated, and reducing the number of trials until the client accesses its target resource.

Moreover, a further aspect of the present invention provides a method of controlling a storage system having a plurality of file servers; a plurality of file systems to be mounted on the file servers; a storage device for providing a storage area to the file servers; and a management module for managing the access of a client to the file systems mounted on the file servers; wherein the storage system provides a shared file system having the same namespace to the client accessing the file systems; and wherein the management module refers to a table for managing the status of the client accessing the file systems, decides the file server to which the file system is to be migrated, and reduces the number of trials until the client accesses its target file system.

Incidentally, aspects of the present invention also provide a computer program to be applied in a storage system, having: a plurality of file servers; a plurality of file systems to be mounted on the file servers; a storage device for providing a storage area to the file servers; and a management module for managing the access of a client to the file systems mounted on the file servers; wherein the storage system provides a shared file system having the same namespace to the client accessing the file systems, and for causing the management module to perform the processing of creating a table for managing the status of the client accessing the file system, referring to a table for managing the status of the client accessing the file systems, deciding the file server to which the file system is to be migrated, and reducing the number of trials until the client accesses its target file system.

According to the aspects of the present invention described above, in a storage system for providing a shared file system where a plurality of file servers have the same namespace, the file system and a file server to be the migration destination of such file system can be decided so as to reduce the access frequency from a client to the file system. Therefore, the access performance from the client to the file system can be improved.

### DESCRIPTION OF DRAWINGS

FIG. 1 is a functional block diagram pertaining to an embodiment of a storage system of the present invention;
FIG. 2 is a functional block diagram as an excerpt of the functions of a shared file system from the storage system illustrated in FIG. 1;
FIG. 3 is a configuration of a memory in a file server illustrated in FIG. 2;
FIG. 4 is a functional block diagram of a management computer;
FIG. 5 is a functional block diagram of a client;
FIG. 6 is a structural diagram of a file system position table;
FIG. 7 is an operational block diagram pertaining to the migration of a file system;
FIG. 8 is a structural diagram of a performance information table;
FIG. 9 is an operational block diagram showing the path switching of the file system;
FIG. 10 is a structural diagram of a sub performance information table;
FIG. 11 is a structural diagram of a connection information table;
FIG. 12 is a processing flow for the file server to acquire the access frequency of a client;
FIG. 13 is a structural diagram of a table showing the access frequency of a client;
FIG. 14 is a management interface to be displayed on the management computer;
FIG. 15 is a processing flow for migrating the file system;
FIG. 16 is a structural diagram of a table showing the access frequency of a client;
FIG. 17 is a management interface to be displayed on the management computer; and
FIG. 18 is a processing flow for changing the access destination file server of a client.

### DETAILED DESCRIPTION

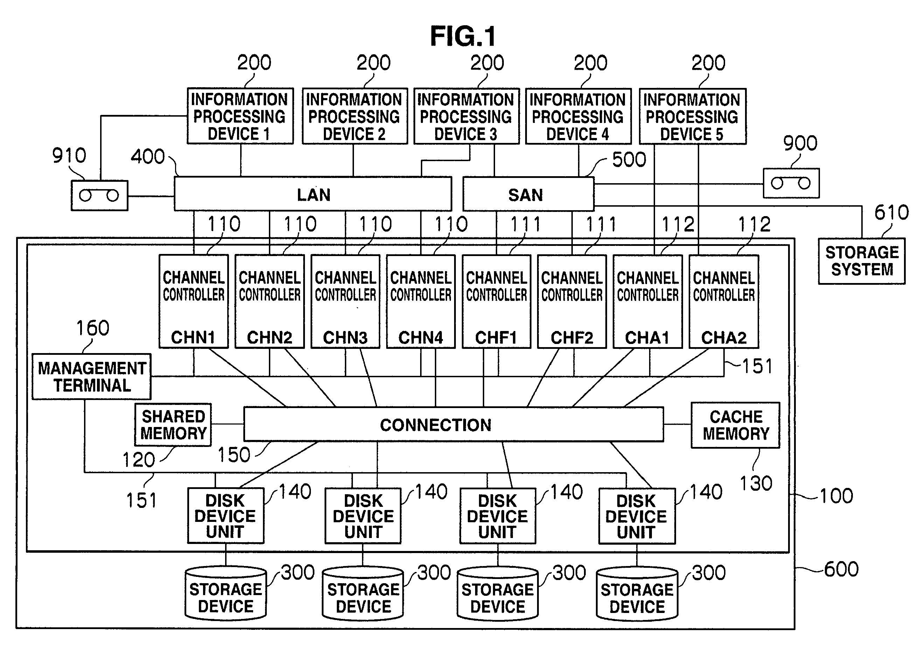

Embodiments of the present invention are now explained with reference to the respective drawings. FIG. 1 is a hardware configuration showing an example of the storage system pertaining to the present invention. This storage system has NAS as the file server. In other words, the file server is built in the storage system.

The storage system 600 is configured by having a plurality of storage devices 300, and a storage device controller 100 for controlling the input and output to and from the storage device 300 in response to the I/O request from an information processing device (client). Information processing devices 1 to 3 (210, 220, 230) are connected to the storage system 600 via a LAN 400. A data access request to the storage system 600 designating a file name (data I/O request in file units) is transmitted from the information processing devices 1 to 3 to the channel controllers CHN 1 to CHN 4 (110) described later.

A backup device 910 is connected to the LAN 400. The backup device 910 stores backup data of data stored in the storage device 300 by communicating with the storage device controller 100 via the LAN 400.

The storage device controller 100 has channel controllers CHN 1 to 4 (110). The storage device controller 100 conveys the write access or read access among the information processing devices 1 to 3, backup device 910 and storage device 300 via the channel controllers CHN 1 to 4 (110) and LAN 400. The channel controllers CHN 1 to 4 (110) respectively receive the file access request from the information processing devices 1 to 3. In other words, the channel controllers CHN 1 to 4 (110) are respectively assigned a network address (an IP address for example) on the LAN 400, and individually act as the file server (NAS) described later, and provide service as the file server to the information processing devices 1 to 3 (200).

As described above, as a result of taking on a configuration of including the channel controllers CHN 1 to 4 (110) for individually providing service as NAS to a single storage system 600, the file servers which were conventionally operated individually by independent computers can be consolidated into a single storage system 600. And, the overall management of the storage system 600 is thereby enabled, and the promotion of streamlining the maintenance procedures such as various setups, controls, failure management and version management can be sought.

The information processing devices 3 to 4 (200) are connected to the storage device controller 100 via a SAN 500. The SAN 500 is a network for transferring data among the information processing devices 3 to 5 (230, 240, 250) in block units, which is a management unit of data in the storage area provided by the storage device 300.

Communication between the information processing devices 3, 4 and the storage device controller 100 via the SAN 500 is conducted according to a general fibre channel protocol. A SAN-compatible backup device 900 is connected to the SAN 500.

The storage device controller 100, in addition to the channel controllers CHN 1 to 4 (110), further has channel controllers CHF 1, 2 (111). The storage device controller 100 performs the communication between the information processing device 3, 4 and the SAN-compatible backup device 900 via the channel controllers CHF 1, 2 (111) and the SAN 500.

The information processing device 5 (250) is further connected to the storage device controller 100 without going through a network such as the LAN 400 or SAN 500. Another storage system 610 to be installed in a site (secondary site) that is remote from the installation site (primary site) of the storage system 600 is connected to the SAN 500. The storage system 610 is used as the device for reproducing data in the replication or remote copy function.

As described above, by integrating and installing the channel controllers CHN 1 to 4 (110), channel controllers CHF 1, 2 (111), and channel controllers CHA 1, 2 (112), a storage system capable of being connected to dissimilar networks can be realized. In other words, this storage system 600 is a SAN-NAS integrated storage system that is connected to the LAN 400 via the channel controllers CHN 1 to 4 (110) and connected to the SAN 500 via the channel controllers CHF 1, 2 (111).

A connection 150 mutually connects the respective channel controllers 110, a shared memory 120, a cache memory 130, and respective disk controllers 140. The mutual transmission and reception of commands and data among the channel controllers 110, shared memory 120, cache memory 130 and disk controllers 140 are conducted via the connection 150. The connection 150, for instance, is configured from a high-speed bus such as an ultra high-speed crossbar switch or the like for performing data transmission via high-speed switching. The connection 150 forms and performs the switching of the path between the volume of the storage devices 300 and the file servers (CHN 1 to CHN 4).

The shared memory 120 and cache memory 130 are memory devices to be shared by the channel controllers 110 and disk controllers 140. The shared memory 120 is primarily used for storing control information and commands, and the cache memory 130 is primarily used for storing data. The disk controller 140 monitors the shared memory 120, and, when it determines that a write command has been written into the shared memory 120, it reads the write data from the cache memory 130 according to such write command and writes this in the storage device 300.

When the data I/O command received by a certain channel controller 110 from the information processing device 200 is a read command, this channel controller 110 writes the read command in the shared memory 120, and checks whether the data to be read exists in the cache memory 130.

The disk controller 140 converts the data access request to the storage device 300 based on a logical address designation transmitted from the channel controller 110 into a data access request based on a physical address designation, and writes or reads data in or from the storage device 300 in response to the I/O request output from the channel controller 110.

The storage device 300 has one or a plurality of disk drives, and provides a storage area accessible from the information processing device 200. A logical volume adapted to the storage space of one or a plurality of physical volumes is set in the storage area provided by the storage device 300. As the logical volume set in the storage device 300, there is a user logical volume accessible from the information processing device 200, and a system logical volume used for controlling the channel controller 110. The management terminal 160 is a computer device for maintaining and managing the storage system 600, and is connected to the respective channel controllers 110 and disk controllers 140 via an internal LAN 151. By operating the management terminal 160, the administrator is able to set the disk drive of the storage device 300, set the logical volume, install the micro program to be executed by the channel controller 110 or disk controller 140, as well as perform other operations.

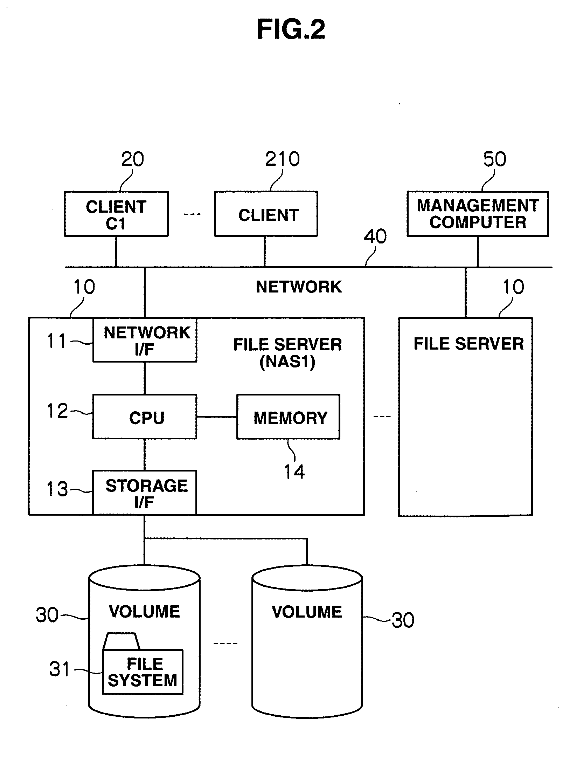

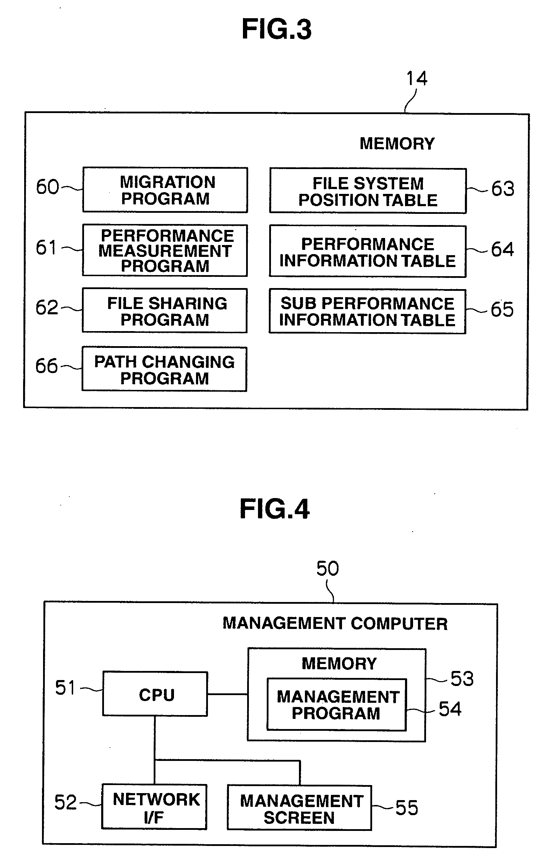

FIG. 2 is a system configuration simplified by extracting a portion of the shared file system from the configuration of the storage system illustrated in FIG. 1. Further, FIG. 3 is a block diagram showing the configuration of the memory 14 of the file server 10. In FIG. 2, the respective channel controllers CHN 1 to 4 depicted in FIG. 1 correspond to a file server 10. The information processing devices 1, 2 illustrated in FIG. 1 correspond to a client 20. A volume 30 is a logical storage area accessible by the client 20 which is configured from one or a plurality of storage devices 300 shown in FIG. 1.

The file server 10 executes a file sharing program 62 loaded in the memory 14 with a CPU 12, and provides to the client 20 a file system 31 stored in the volume 30 as the shared file system to be shared by a plurality of clients. The plurality of clients 20 are able to access the file system 31 stored in the logical volume 30 via a network 40. The client 20 is a computer device having the likes of a CPU and memory, and, for instance, is configured from a workstation, mainframe computer, personal computer or the like. The client 20 can also be configured by network-connecting a plurality of computers. The client 20 is loaded with an application program that operates on an operating system. As the application program, for instance, there is an automatic teller machine system of banks, a seat reservation system of airline companies, and so on.

The file system 31 stored in the volume 30, as a shared file system, may be a directory or a file so as long as it is accessible by the client.

A network interface 11 is an interface for connecting the file server to the network 40. The CPU 12 acquires, as the network load information, the data volume transmitted and received by the network interface 11 between the file server and client 20 via the network 40, and the number of transmissions thereof. As the network interface 11, for instance, Ethernet (registered trademark) or the like may be used.

A storage interface 13 is an interface for connecting the file server 10 to the volume 30 of the storage device 300 (FIG. 1). The CPU 12 acquires, as I/O load information, the data volume transmitted and received by the storage interface 13 with the volume 30, and the number of transmissions thereof. As the storage interface 13, for example, ATA (Advanced Technology Attachment), SCSI (Small Computer System Interface), Fibre Channel or the like may be used.

The file sharing program 62 of a certain file server 10 provides to the client a shared file system having a single namespace by mutually notifying, among the file sharing programs being executed on the other file servers 10, the storage site of the file system 31 provided as the shared file system from the file sharing program 62 to the client 20. Therefore, all clients 20 are able to access the file system as though it is a single shared file system without being influenced by the configuration of the file server. Since this configuration is able to prevent the configuration of the file server from influencing the client 20, it is suitable in distributing the load during the file access among file servers, or when newly introducing a file server to the storage system.

FIG. 4 shows a management computer 50 configuring the management terminal 160 explained with reference to FIG. 1. The management computer 50 executes a management program 54 in a memory 53 with a CPU 51 and thereby manages the file server 10 and client 20. The management computer 50 provides the user with a management screen 55 as an interface for the administrator to use the management program 54. The management program 54 is an example of a management module. Incidentally, a management module is a module that shows the partial function of a certain program, or a module that organizes a plurality of programs.

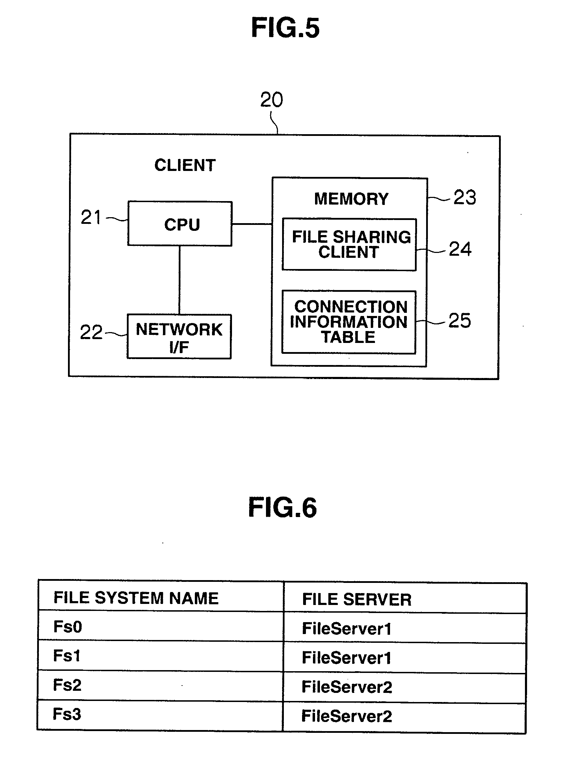

FIG. 5 shows the configuration of the client 20. The client 20 executes a file sharing client in a memory 23 with a CPU 21, and accesses the shared file system provided by the file server 10 to the client via a network interface 22.

As shown in FIG. 3, in addition to the file sharing program 62, the file server 10 also has a resident performance measurement program 61. The respective programs and information tables illustrated in FIG. 3 configure the management module. As shown in FIG. 2, the volume 30 stores, for instance, a file system 31 to be used by the client (C1) 20, and the file server 10 (NAS 1) accesses the file system 31 via a storage interface 13 to read or write data. The client (C1) 20 is able to access the file system 31 as a part of the shared file system provided by the file sharing program 62 via the network 40 connected to the network interface 11.

When the network 40 is a LAN (Local Area Network), for example, communication between the client 20 and the file server 10 is conducted via a communication protocol such as TCP/IP (Transmission Control Protocol/Internet Protocol) or UDP (User Datagram Protocol). As the shared file system, for instance, NFS (Network File System) or CIFS (Common Internet File System) may be used. The volume 30 may also be a single hard disk, a plurality of hard disks configured in RAID (Redundant Array of Independent Inexpensive Disks), or a logical storage area on such single hard disk or RAID.

When the client 20 designates a file system that is not mounted on the file server 10 and is able to access this file server 10, the file sharing program 62 refers to a file system position table 63, acquires a file server name mounting the target file system, and returns this file server name to the client 20; that is, it transfers the request from the client to this client. By receiving this transferred request and re-accessing a separate file server, the client 20 is able to access the target file system 31. When this transfer of request occurs, this will become an overhead to the client, and the performance in accessing the client's file server will deteriorate.

FIG. 6 is a diagram showing an example of the constitution of the file system position table 63 (FIG. 2). The file system position table 63 stores the correspondence of the respective file servers providing a shared file system having the same namespace, and the file system mounted on this file server.

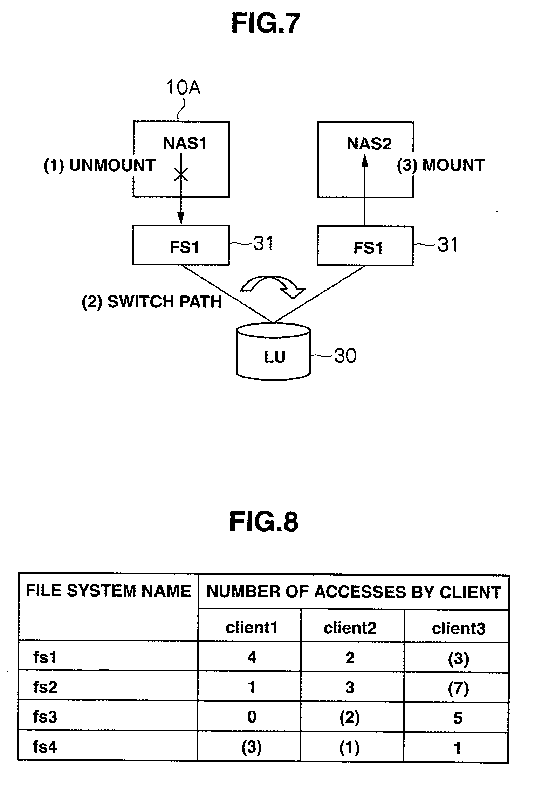

With the migration program 60 (FIG. 3) stored in the memory 14 depicted in FIG. 3, as shown in FIG. 7, when the file system 31 mounted on the file server (NAS 1) 10A is designated and the another file server (NAS 2) 10B is additionally designated, it separates the file system 31 from the file server 10A ((1) unmount), switches the path between the file server and the volume (logical unit LU) 30 ((2) switch), and subsequently connects this file system 31 to another server 10B ((3) mount).

As a method of designating the file system, for instance, a method of designating the file system name can be adopted. As a method of designating the file server, for instance, a method of designating the file server name or the file server IP address can be adopted.

When a file system is migrated from a certain file server to another file server, the migration program 60 records the name of the file system name, and the name of the file server to which this file system is newly connected (mounted) in the file system position table 63 (FIG. 3). This file position table 63 corresponds to the first table in the claims. Instead of the file server name, as described above, the IP address of the file server can also be recorded in this table.

FIG. 8 shows the constitution of the performance information table 61 illustrated in FIG. 2. The performance measurement program 61 records the number of accesses made by the client 20 to a certain file system in a performance information table 64. The performance information table 64 retains, with the file system name as the key, the name of the client who accessed this file system and the number of times such client accessed the file system. This performance information table corresponds to the first table in the claims.

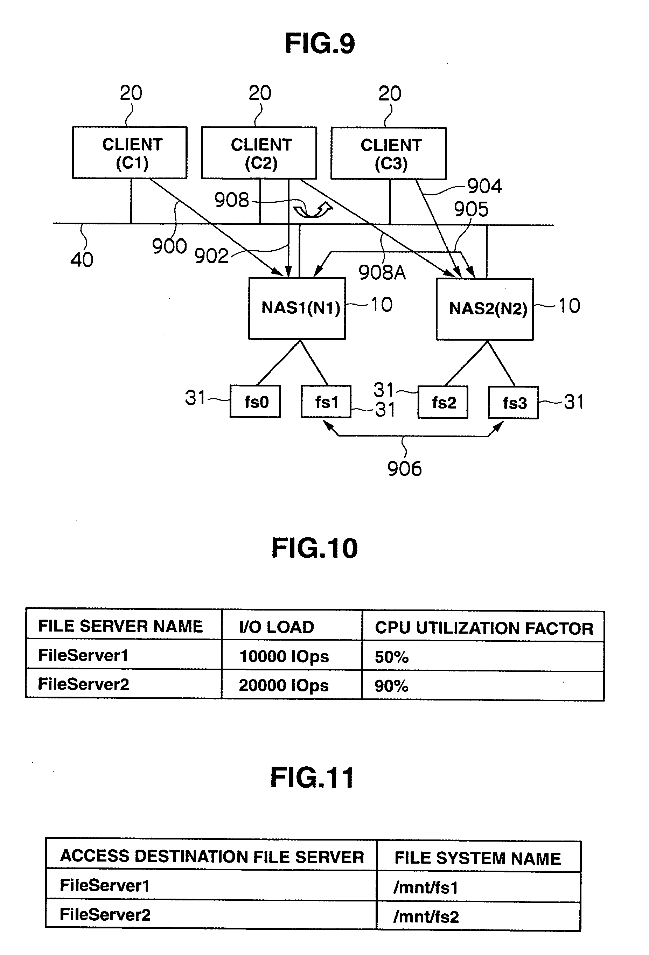

The table constitution of FIG. 8 relates to the system shown in FIG. 9 configured from the clients 20 (C1, C2, C3), file servers 10 (NAS 1 (N1), NAS 2 (N2)) and file systems 31 (fs0, fs1, fs2, fs3). The clients C1, C2 access (900, 902) NAS 1, and the client C3 accesses (904) NAS 3. The NAS 1 mounts the file systems fs0 and fs1, and the NAS 2 mounts the file systems fs2 and fs3.

Specification of the client may be dependent on the IP address of the client instead of the client name. FIG. 8 shows that the client C1 accessed the file system fs1 four times, client C2 accessed it twice, and client C3 accessed it three times. The other file systems are as per FIG. 8.

Incidentally, the parentheses () shown in FIG. 8 imply that the request from the client to the file server should be a request to another file server, and will be transferred to the client. To continue the explanation with reference to FIG. 9, for example, when the client C3 is to access the file system fs0, the client C3 accesses the file server N2 which is the access destination predetermined in the beginning. The file server N2 refers to its own file system position information table 63 (FIG. 2), and transmits information to the client C3 indicating that it should access the file server N1. Thus, the access frequency is indicated in parentheses in the column of fs 1/client C3 of FIG. 8.

The performance measurement program 61 (FIG. 3) of a certain file server is able to additionally receive the request from a performance measurement program being executed on another file server via the network 40 (FIG. 2), and return to the other file server the contents of the performance information table 64, the CPU utilization factor of the file server 10 being executed by the performance measurement program 61, network load information and I/O load information.

FIG. 10 is a diagram showing the constitution of the sub performance information table 65 illustrated in FIG. 3. The performance measurement program 61 may also transmit a request to a performance measurement program being executed on another file server, receive the CPU utilization factor, I/O load or network load of the other file server or other numerical values representing the performance of the file server, and store these in the sub performance information table 65. FIG. 10 shows that the I/O load of the file server 1 (File Server 1) is 10000IOps (Input/Output per second), and that the CPU utilization factor is 50%.

FIG. 11 is a diagram showing the constitution of the connection information table 25 stored in the memory 23 of the client 20 depicted in FIG. 5. The file sharing client 24, based on the connection information table, accesses the file system mounting an access destination file server via a shared file server provided by the file sharing program.

The file sharing client 24 acquires the file server name and file system name from the connection information table 25, and, upon accessing a file server, if the target file system was not mounted on such file server, the file server 10 returns to the file sharing client 24 the correct file server name mounting the target file system. The file sharing client 24 receives the correct file server name, and accesses the correct file server upon updating the connection information table 25 as necessary. As a result of repeating this process, even when the file system 30 is migrated among a plurality of file servers 10, the file sharing client 24 will be able to access the target file system 30.

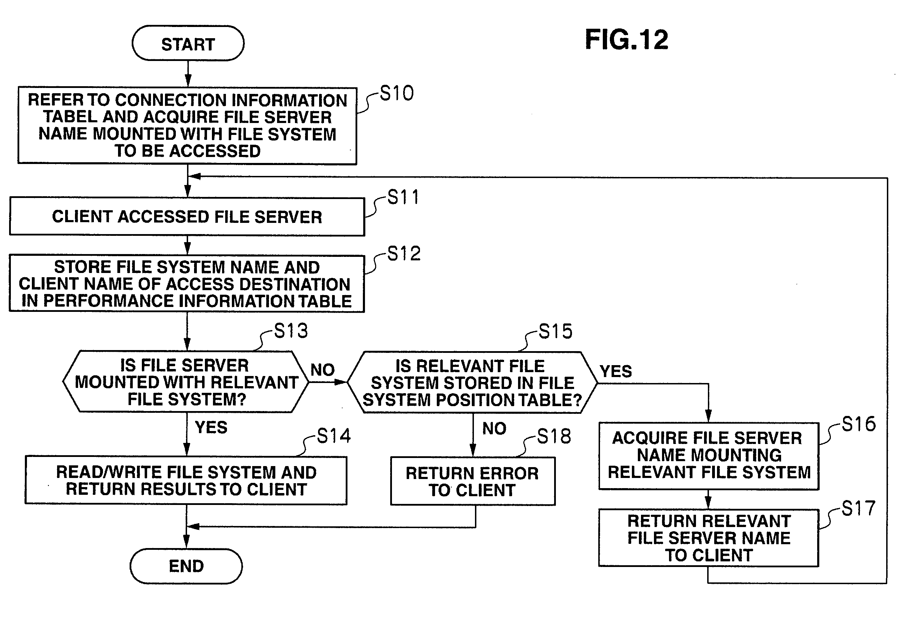

FIG. 12 is a flowchart describing the processing steps for the file server 10 to create the performance information table 64. The client 20 refers to the connection information table 25 and acquires the name of the file server 10 corresponding to the file system 31 to be accessed (S10). The client 20 executes the file sharing client 24 and accesses this file server 10 via the network 40 (S11). The performance measurement program 61 incrementally increases by one the number of accesses corresponding to the file system name and client name 20 to be accessed by the client 20 from the performance information table 64, and stores this in the access performance information table (S12).

Next, the file server 10 checks whether the file system 31 designated by the client is mounted on itself (S13). When the file system 31 is mounted (S13: YES), the [file] server 10 executes the write access or read access according to the request of the client 20 to the file system 31, and sends the result to the client 20 (S14).

Meanwhile, when the file server 10 is not mounting the file system 31 (S13: NO), the file server 10 refers to the file system position table 63, and acquires the name of another file server name mounting the file system 31 (S15). When the file server name could be acquired (S15: YES), the file server 10 returns this file server name to the client 20 (S17). When the client 20 receives the file server name, it repeats the processing steps of S11 to S13 once again to the correct file server. When the file server 10 is not able to acquire the file server name mounting the file system 31 (S15: NO), the file server 10 notifies an error to the client 20 to the effect that the file system does not exist (S18).

As a result of the processing shown in FIG. 12, the access frequency of the client to all file systems mounting the file server will become clear. The administrator acquires the performance information table from all servers via the management computer, and by migrating a file system mounted on a certain file server to a separate file server based thereon, it reduces the number of accesses from the client to the server without having to make the client retry the access from the client to the server, reduces the overall load of the shared file system, and improves the access performance to the file system from the client. Incidentally, instead of the administrator acquiring access frequency of all file servers, the administrator may acquire the access frequency of a predetermined scope of file servers.

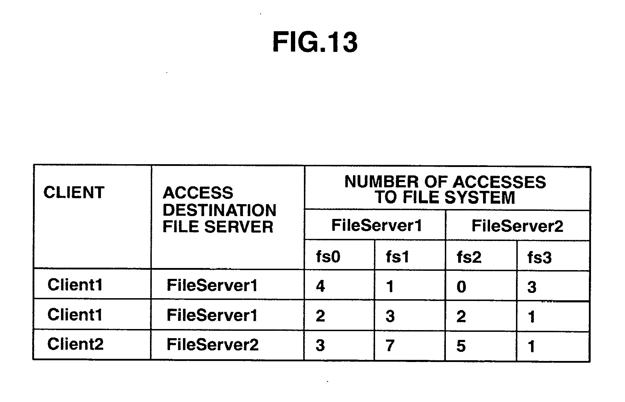

FIG. 13 is a diagram showing an example of a table where the management computer 50 acquires the performance information table 64 from all file servers 10, acquires the connection information with the file server which is the access destination of the client from all clients, and thereafter records, for each client, the file server name designated as the access destination and the number of accesses to the file system. Here, to continue explaining with reference to FIG. 9, when focusing on the client C3 (client 3), it is evident that the client C3 is often accessing the [file system] fs1 mounted on the file server N1 (File Server 1) even though the [file server] N2 (File Server 2) is designated as the file server of the access destination.

In other words, the client C3 once tries to access the file server N2 (904), receives an order to retry from this server, thereafter re-accesses the file server N1 (905), and ultimately accesses the [file system] fs 1. Thus, when the [file system] fs1 is migrated to the file server N2 and the [file system] fs3 is migrated to the file server N1 (906), the client C3 will be able to access file system fs1 in one try without retrying to access the file system.

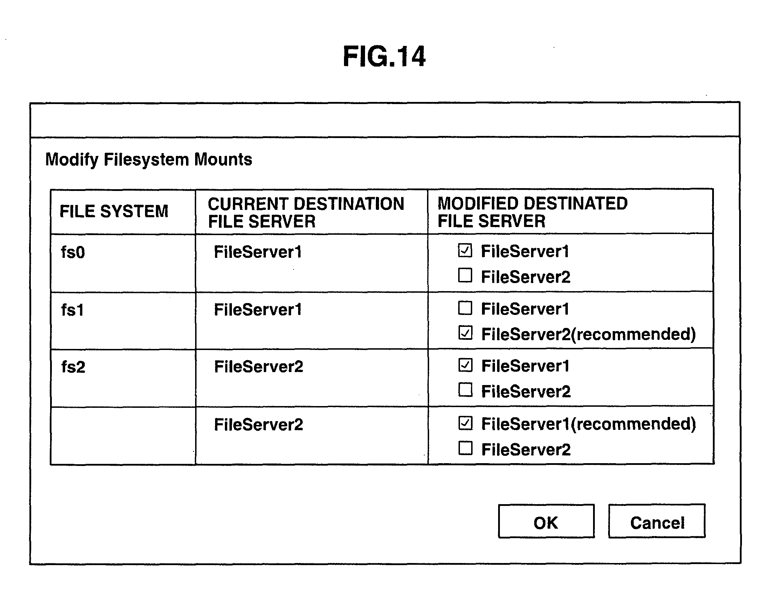

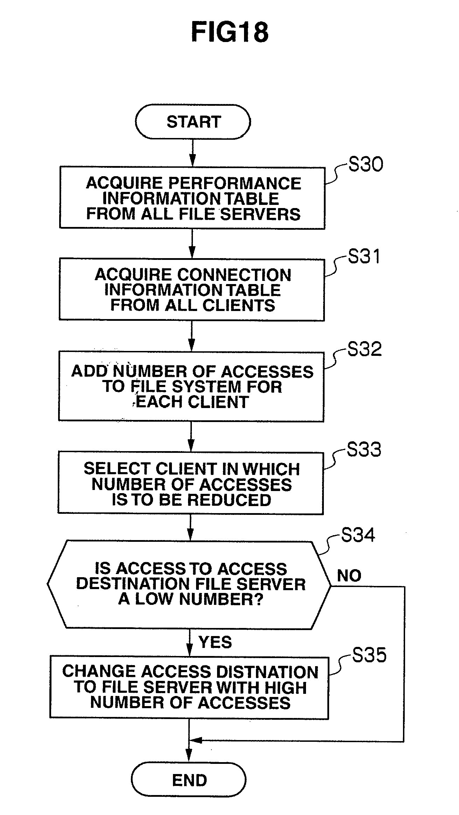

FIG. 14 is an example of the management interface displayed on the screen of the management computer 50. The management interface screen displays the file system, the file server connected to this file system, and the destination file server of the file system recommended for improving the client's access performance. This, for example, is conducted after simulating the comparison of the number of accesses regarding all correspondences of the file server before and after the migration of the file system and the file system. Incidentally, this simulation, if desired, is combined with the processing of the flowchart illustrated in FIG. 18 described later.

FIG. 14 shows a case where it is recommended that file system fs1 is migrated from the file server 1 to the file server 2, and that the [file system] fs3 is migrated in reverse. The administrator may operate the management computer according to the recommendation displayed on the management interface screen for migrating the file system. Needless to say, migration of the file system may be automated with a program of the management computer.

The management screen shown in FIG. 14 may also display performance information such as the CPU utilization factor and I/O load of the file server stored in the sub performance information table. Upon migrating the file system, the administrator may refer to the performance information of the file server. The file server to which the file system is to be migrated is determined while also giving consideration to this performance information. Migration of the file system may be conducted with a management program of the management computer 50, or the performance measurement program 61 (FIG. 3) of the file server 10 to become the master in relation to the other file server.

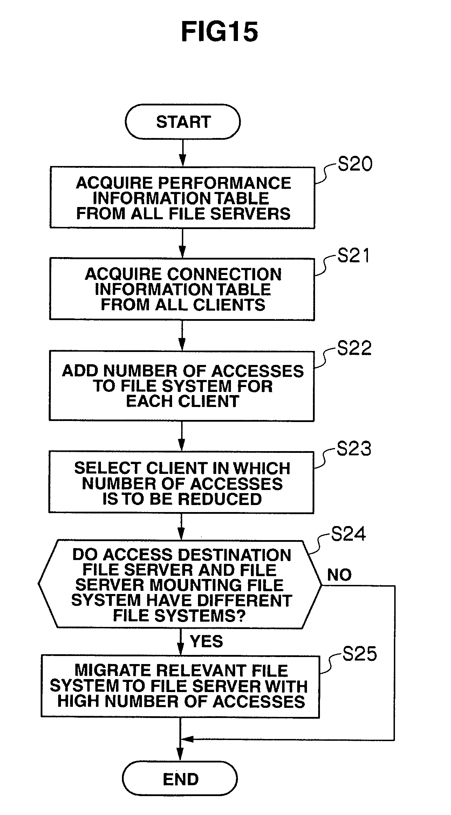

FIG. 15 is a flowchart showing an example of the processing steps for the performance measurement program 61 to migrate the file system. The performance measurement program 61 acquires the contents of the performance information table 64 stored in the file server from the performance measurement program 61 that operates on all file servers (S20). The performance measurement program 61 acquires the connection information table 25 of all clients (S21). Next, the performance measurement program creates the table illustrated in FIG. 13 in the memory 14 (S22).

When the administrator or the performance measurement program 61 designates the name of a client in which the number of accesses is to be reduced (S23), the performance measurement program 61 acquires the number of accesses of the client to the file system, and acquires the name of the file system mounted on a file server that is not designated as the access destination (S24). If one or more file system names can be acquired (S24: YES), the performance measurement program 61 instructs the migration program 60 to migrate the file system with the most number of accesses among the file systems, or to migrate all file systems to a file server that is designated as the access destination of the client (S25). If a file system name could not be acquired (S24: NO), the processing is ended.

Incidentally, upon migrating the file system, the performance measurement program 61 may refer to the sub performance information table depicted in FIG. 10. For example, when the CPU load or I/O load of the destination file server is high, migration of the file system may be cancelled.

Although FIG. 15 is a flowchart of the processing steps for the performance measurement program 61 to migrate the file system, as described above, the management program 54 may perform the similar processing steps based on the administrator's operation. FIG. 14 is an example of the management screen 55, and if it is able to show the administrator how the file system is currently being mounted or the recommended destination to where the file system should be migrated, the administrator will be able to determine whether or not to migrate the file system.

According to the foregoing explanation, the access performance of a specific client to all file systems mounted on the file server that provides a shared file system having the same namespace can be improved. Thereupon, since the client is not required to change the setting, management costs can be reduced.

Next, explained is the method of improving the access performance of the client by the client changing the file server to be accessed and reducing the number of accesses by the client based on the access frequency acquired by executing the flowchart illustrated in FIG. 15.

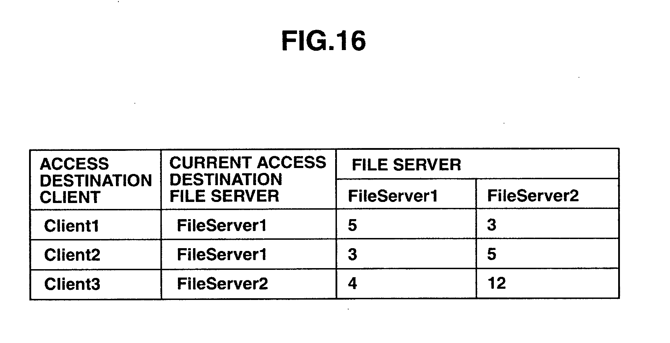

FIG. 16 is an example of a table where the performance information table 64 from all file servers 10 is acquired, the connection information table 25 from all clients is acquired, and, for each client, the file server name and number of accesses to the file system designated as the access destination are totaled for each file server mounted on such file system.

To continue explaining with reference to FIG. 9, for instance, it is evident that the client C2 often accesses the file server N2 even though the file server N1 is designated as the file server of the access destination (902). Thus, when the access destination of the client C2 is changed to the file server N2 (908 → 908A), the access performance of the client C2 will improve.

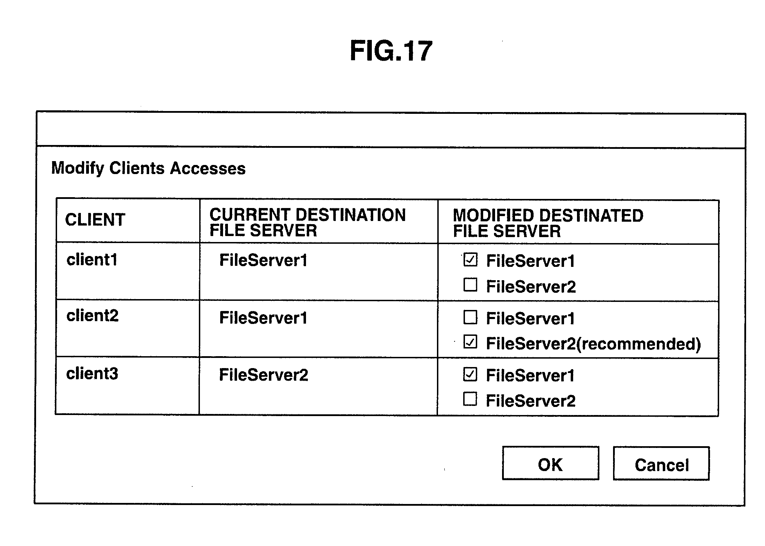

FIG. 17 is an example of the management interface screen displayed as the management screen of the management computer 50. The management interface screen displays the client, the file server currently connected to the client, and the destination file server of the client recommended for improving the client's access performance. Since the administrator is able to improve the client's access performance by following the recommendation displayed on the management interface screen, management costs can be reduced.

The management screen may also display performance information such as the CPU utilization factor and I/O load of the file server stored in the sub performance information table. Upon migrating the file system, the administrator will be able to improve the client's access performance even more since he/she will be able to give consideration to the performance information of the file server.

FIG. 18 is a flowchart showing the processing steps for the performance measurement program 61 to change the client's access destination file server. The performance measurement program 61 acquires the contents of the performance information table 64 stored in the file server from the performance measurement program 61 that operates on all file servers (S30). The performance measurement program 61 acquires the connection information table 25 of all clients (S31). Next, the performance measurement program creates the table illustrated in FIG. 16 in the memory 14 (S32).

When the administrator or the performance measurement program 61 designates the name of a client in which the number of accesses is to be reduced (client 2 of FIG. 16) (S33), the performance measurement program 61 acquires the number of accesses to the file server from the client (S34). If the number of accesses to the file server (file server 1) designated as the client's access destination is small (S34: YES), the performance measurement program 61 changes the connection information table 25 with a path changing program 66 so that the file server with the most accesses among the file server will become the access destination (S35). If the number of accesses to the file server designated as the client's access destination is not small (S34: NO), the performance measurement program 61 ends the processing. Changes to the file server to become the client's access destination depicted in FIG. 9 above are executed with the flowchart of FIG. 18.

Incidentally, upon migrating the file system, the performance measurement program 61 may refer to the sub performance information table shown in FIG. 10. For instance, when the CPU load or I/O load of the file server after the access destination has been changed is high, the change may be cancelled.

Although FIG. 18 is a flowchart of the processing steps for the performance measurement program 61 to change the client's access destination file server, as described above, the management program 54 may perform the similar processing steps based on the administrator's operation. FIG. 17 is an example of the management screen 55, and if it is able to show the administrator how the client's access destination file server is current set, and the file server that is recommended to become the access destination file server, the administrator will be able to determine whether or not to change the access destination file server.

Incidentally, there is no particular limitation in the usage of the file server 10, and the shared file system may be used in general computers having an operation environment that can be provided to the client. For instance, this may be employed in various computer systems such as a workstation, mainframe computer, network server, personal computer and the like.

A computer program such as the performance measurement program 61 that realizes the management module of the present invention may be recorded on a computer-recordable recording medium. As the recording medium, for instance, an optical recording medium (recording mediums such as a CD-RAM, CD-ROM, DVD-RAM, DVD-ROM or DVD-R capable of optically reading data), a magnetic recording medium (recording mediums such as a flexible disk, magnetic card, magnetic tape or hard disk drive capable of magnetically reading data), or a memory element (semiconductor memory element such as a DRAM, ferroelectric memory element such as an FRAM, etc.) can be suitably used.

Although FIG. 1 was explained as a system where the file server (NAS) is built in the storage, a plurality of file servers may also be connected to the storage via a SAN.

A management module such as the performance measurement program and management program may target a directory or file instead of a file system. When targeting a directory or a file instead of a file system, this is preferable since the client's access performance can be controlled in more detail.

The storage system according to the present invention constantly creates and monitors the table illustrated in FIG. 3, periodically migrates the file system, and constantly makes sure that the access performance of the client's file system does not deteriorate.

Incidentally, although FIG. 9 gave consideration to the client's access frequency regarding two file servers, the file system may also be migrated according to the access frequency even in cases of three or more file servers. The embodiments explained above are merely an example, and the embodiments can be suitably modified within the scope of the present invention.

## Claims

1. A storage system, comprising:
a plurality of file servers;
a plurality of file systems to be mounted on said file servers;
a storage device for providing a storage area to said file servers; and
a management module for managing the access of a client to said file systems mounted on said file servers;
wherein said storage system provides a shared file system having the same namespace to said client accessing said file systems; and
wherein said management module, includes:
a first information table storing the correspondence of said file system and said file server mounting said file system; and
a second information table storing the correspondence of said file system and the frequency of access by said client to said file system.

2. The storage system according to claim 1, wherein said management module updates said access frequency of said second information table each time said client accesses said file system.

3. The storage system according to claim 1 or claim 2, wherein said management module totals said second information table per said client and decides said file system and another file server to become the destination of said file system so that the number of accesses to said file system from a specific client is reduced.

4. The storage system according to claim 3, wherein said management module includes a program for mounting said file system on said another file server.

5. The storage system according to claim 3 or claim 4, wherein said management module calculates the combination of said file system in which said number of accesses is reduced and the file server to which said file system is migrated, and outputs the result thereof.

6. The storage system according to claim 1 or claim 2, wherein said management module totals said second information table per said client, and decides another server to which a specific client should be connected so that the number of accesses to said file system from said specific client is reduced.

7. The storage system according to claim 6, wherein said management module includes a program for changing the access path from said client to said another file server so that said client is connected to said another file server.

8. The storage system according to any one of claims 3 to 5, wherein said management module decides the combination of said file system and said another file server so that the CPU utilization factor of said another file server to which said file system is migrated will decrease.

9. The storage system according to any one of claims 3 to 5, wherein said management module decides the combination of said file system and said another file server so that the I/O load of said another file server to which said file system is migrated will decrease.

10. The storage system according to any one of claims 3 to 5, wherein said management module decides the combination of said file system and said another file server so that the network load of said another file server to which said file system is migrated will decrease.

11. A storage system, comprising:
a plurality of nodes;
a plurality of resources to be mounted on said nodes;
a storage device for providing a storage area to said resources;
a management module for managing the access of a client to said resources mounted on said nodes;
a table for managing the status of said client accessing said resources; and
a management module for referring to said table, deciding the node to which said resource is to be migrated, and reducing the number of trials until said client accesses its target resource.

12. The storage system according to claim 11, wherein said node is a file server, and said resource is a file system, directory or a file.

13. A method of controlling a storage system comprising a plurality of file servers; a plurality of file systems to be mounted on said file servers; a storage device for providing a storage area to said file servers; and a management module for managing the access of a client to said file systems mounted on said file servers; wherein said storage system provides a shared file system having the same namespace to said client accessing said file systems; and wherein said management module refers to a table for managing the status of said client accessing said file systems, decides said file server to which said file system is to be migrated, and reduces the number of trials until said client accesses its target file system.
